# EUROPEAN PATENT SPECIFICATION

(11) **EP 2 135 393 B1**
(45) Date of publication and mention of the grant of the patent: **06.04.2011**
(21) Application number: 07728111.1
(22) Date of filing: 13.04.2007
(51) Int. Cl.: H04L 12/46, H04L 12/56

(54) **ETHERNET SPANNING TREE PROVISION**
ETHERNET-SPANNING-TREE-BEREITSTELLUNG
CONSTRUCTION D'UN ARBRE RECOUVRANT SUR ETHERNET

(43) Date of publication of application: 23.12.2009
(73) Proprietor: Telefonaktiebolaget LM Ericsson (publ), 164 83 Stockholm (SE)
(72) Inventor: FARKAS, Janos, H-6000 Kecskemet (HU); ANTAL, Csaba, H-2340 Kiskunlachaza (HU); TAKACS, Attila, H-1195 Budapest (HU); SALTSIDIS, Panagiotis, S-11829 Stockholm (SE)
(74) Representative: Mitchell, Matthew Benedict David
(86) International application number: PCT/EP2007/053646
(87) International publication number: WO 2008/125144

(56) References cited:
- EP-A- 1 315 329
- EP-A- 1 592 183
- SEISHO YASUKAWA (NTT)-ALAN KULLBERG (MOTOROLA)-EDITOR: "Extended RSVP-TE for Point-to-Multipoint LSP Tunnels; draft-yasukawa-mpls-rsvp-p2mp-03.txt" IETF STANDARD-WORKING-DRAFT, INTERNET ENGINEERING TASK FORCE, IETF, CH, no. 3, 1 October 2003 (2003-10-01), XP015037103 ISSN: 0000-0004
- YASUKAWA S ET AL: "Scalable multicast MPLS protocol for next generation broadband service convergence network" COMMUNICATIONS, 2004 IEEE INTERNATIONAL CONFERENCE ON PARIS, FRANCE 20-24 JUNE 2004, PISCATAWAY, NJ, USA,IEEE, vol. 2, 20 June 2004 (2004-06-20), pages 1019-1023, XP010710445 ISBN: 978-0-7803-8533-7
- DANIEL O AWDUCHE MOVAZ NETWORKS ET AL: "RSVP-TE: Extensions to RSVP for LSP Tunnels; draft-ietf-mpls-rsvp-lsp-tunnel-09.txt" IETF STANDARD-WORKING-DRAFT, INTERNET ENGINEERING TASK FORCE, IETF, CH, vol. mpls, no. 9, 1 August 2001 (2001-08-01), XP015023822 ISSN: 0000-0004

## Description

### Technical field

The invention relates to the provision of Spanning Trees in an Ethernet network.

### Background

An Ethernet is a Local Area Network (LAN) for computers, and has been standardized as IEEE 802.3. Stations on an Ethernet communicate with one another by sending each other data packets. Each station on an Ethernet is provided with a Media Access Control (MAC) address that is used in the data packets to specify the destination of the data packet and the source of the data packet.

Where an Ethernet network is large, it is split into segments, and any data packets moving from one segment to another traverse a "bridge". A bridge is defined as a device that behaves according to IEEE 802.1D, and connects different network segments at the data link layer. A bridge processes the information from each packet of data that it receives, and in particular makes use of the source and destination addresses contained in the packet header.

A transparent (or adaptive) bridge uses a forwarding database to direct frames to the correct network segment. The database initially starts off empty, and entries identifying Ethernet stations are added as the bridge learns the location of each station. If a bridge receives a packet that has a destination address that is not in the database, the packet is broadcast to all ports of the bridge and forwarded to all segments in the network. A bridge can populate the database using the source address contained in data packets that traverse the bridge. By comparing the source address with the port at which a frame was received, the bridge can "learn" which addresses belong to stations connected via each port.

Bridges typically use the Spanning Tree Protocol (STP) to prevent the occurrence of loops in the network. A root bridge is elected, and all other bridges that use the Spanning Tree calculate the shortest path to the root bridge. This produces a loop free topology where multiple paths to the root bridge can be created, and all other paths are disabled. All other links that are not part of the Spanning Tree are disabled, and so there is only one path to the root bridge. The Spanning Tree avoids problems that could otherwise occur if more than one path were used at once. For example, packets could be broadcast between switches and caught in a loop.

The Multiple Spanning Tree Protocol (MSTP) is an extension of the STP that allows virtual LANs (VLANs) to use the STP. MSTP allows the creation of a separate Spanning Tree for each VLAN, and blocks redundant links in each Spanning Tree.

In order to increase the efficiency of Ethernet forwarding, Shortest Path Bridging (SPB) has been proposed in IEEE P802.laq/D0.3, although it is not yet defined.

One proposal to increase the efficiency of Ethernet forwarding relies on an extended version of MSTP. According to this solution, each bridge calculates and maintains a dedicated tree for its own use. The bridge constructs its tree so that all other bridges are reachable on the shortest path over the tree. In order to maintain symmetrical paths, which are required for proper address learning, a path vector is added to the tree calculation algorithm for tie breaking in the case where two paths are found to have the same cost. The path vector ensures that any two bridges at the ends of equal cost paths select the same path in their own Spanning Tree. When a bridge acts as an ingress bridge, it tags some incoming frames with a dedicated VLAN ID (VID) that unambiguously identifies the Spanning Tree instance (MSTI) of the ingress bridge. Traffic tagged with this VID is forwarded throughout the network on the ingress' tree.

Another proposal is to substitute MSTP with other control mechanisms. IEEE is preparing a project called Provider Backbone Bridging Traffic Engineering (PBB-TE) that should open up the Ethernet standard to allow non-MSTP control mechanisms.

One non-MSTP option is the reservation of a special Spanning Tree instance identifier (MSTID). VLANs assigned to this MSTID will be out of the control of MSTP.

Another alternative is to use Ethernet control plane Provider Backbone Transport (PBT), as described in David Allan et al., "Ethernet as Carrier transport Infrastructure", IEEE Communications Magazine, February 2006. This promotes the static configuration of end-to-end paths in the network. Another alternative is to extend Generalized Multiprotocol Label Switching (GMPLS) for Ethernet (GELS).

Utilizing GMPLS for point to point and multipoint connection setup has been discussed in, for example, Don Fedyk et al, "GMPLS control of Ethernet," <draft-fedyk-gmpls-ethernet-pbt-01.txt> October 2006, and L. Andersson and A. Gavler, "Extension to RSVP-TE for GMPLS Controlled Ethernet - An experimental approach," <draft-andersson-gels-exp-rsvp-te-00.txt>, Work in progress, January 26, 2007. However the possible application of GMPLS to control the Spanning Tree configuration is not yet considered.

EP 1315329 describes a method of routing point-to-multipoint traffic in a MultiProtocol Label Switching (MPLS) network, but is not concerned with configuring port states in an Ethernet network having a Spanning Tree topology.

In contrast to PBT and GELS, if GMPLS is solely used to setup a Spanning Tree topology using Shortest Path Bridging, the MAC address learning functionality and broadcast of unknown addresses remains in use.

### Summary

According to a first aspect of the present invention, there is provided a method of providing a Spanning Tree to nodes on an Ethernet network. A Spanning Tree topology is calculated, and a Resource Reservation Protocol Traffic Extension path message is generated. The path message contained at least a part of the Spanning Tree topology. The path message is then sent to bridge nodes on the Ethernet network, which then configure their port states based on information contained in the path message. Optionally, the bridge nodes may also configure port Virtual Local Area Network membership.

It is preferred that the message contains the Spanning Tree topology for the entire Ethernet network, although it is possible that a Spanning Tree topology may be calculated and distributed to bridge nodes over only a part of the Ethernet network.

The message may contain either a Spanning Tree instance identifier or a General Control Plane Identifier. Alternatively, the message may contain a Virtual Local Area Network Identifier, the Virtual Local Area Network Identifier being associated with either a Spanning Tree instance identifier or a General Control Plane Identifier

It is preferred that the path message comprises a type-length-value object included in a Label Switched Path object.

The Spanning Tree topology is calculated by a dedicated node disposed on the Ethernet network, or alternatively may be calculated by a root bridge node of the Spanning Tree.

According to a second aspect of the invention, there is provided a node for use in an Ethernet network, having a Path Computational Element (PCE). The node comprises a processor for calculating a Spanning Tree topology for the Ethernet network. The node also comprises means for generating a Resource Reservation Protocol Traffic Extension path message, the message containing at least a part of the calculated Spanning Tree topology. A transmitter is also provided for transmitting the path message to bridges on the Ethernet network. The path message contains information arragned to be used by the bridge nodes to configure port states.

The node may be a dedicated node for calculating the Spanning Tree topology, or alternatively may be a root bridge having Spanning Tree topology calculation functionality.

According to a third aspect of the invention, there is provided a bridge node for use in an Ethernet network. The bridge node comprises a receiver for receiving a Resource Reservation Protocol Traffic Extension path message, the message containing at least a part of a Spanning Tree topology. The bridge node further comprises means to set port states to Discarding or Forwarding depending on the Spanning Tree topology contained in the message. Preferably, the bridge node may also comprise means to set port VLAN membership.

The advantages of the invention in which a Spanning Tree using Shortest Path Bridging is set up whilst allowing the MAC address learning functionality and broadcast of unknown addresses to remain in use include the following:

There are several applications that benefit from the address learning and broadcast nature of Ethernet. For instance, workstation mobility in an office environment benefits from the plug and play nature provided by Ethernet networks. In general, multipoint services, e.g., E-LAN, can be easily established when MAC address learning is in place. Multicast applications benefit from the inherent frame replication capabilities of Ethernet since branching is essentially supported. VLAN and multicast registration are provided by the Multiple Registration Protocol (MRP), "Multiple Registration Protocol", IEEE P802.lak/D8.0, November 29, 2006.

High capacity Ethernet networks are in use for Storage Area Networks. In contrast to using MSTP, GMPLS could be used to traffic engineer the Spanning Tree connectivity, and in cases of changes in the capacity demand, the Spanning Tree topology could be adjusted, automatically, on demand, and with fine granularity.

In general, in environments where the MAC address space is not in full control of the operator learning is the only feature that is available to maintain connectivity.

Temporal loops are generally a problem for distributed routing algorithms. In Ethernet networks, due to the broadcasting of unknown addresses, loops have dramatic effects on the network. Rapid STP (RSTP) introduces heuristics and applies timers to block traffic forwarding until a new tree is configured and ready to use at all bridges. With centralized tree calculation and root initiated directed configuration of trees, the possibility of loops can be reduced to single link loops.

With centralized Spanning Tree calculation the configuration of pre-calculated/preestablished and deterministic protection schemes for multipoint services is possible. Furthermore, traffic engineering algorithms can consider the topology of other trees in the network when calculating new Spanning Trees. With traditional MSTP this is not possible.

In contrast to the PBT and GELS, solutions, if GMPLS is used to setup a Spanning Tree, the MAC address learning functionality and broadcast of unknown addresses can still be maintained. However the loop free topology is not calculated and configured using MSTP.

### Brief description of the drawings

In the following, advantageous embodiments of the invention will be described in more details by means of figures in which:
Figure 1 is a flow chart illustrating the steps of an advantageous embodiment of the invention;
Figure 2 illustrates schematically a possible format of a type-length-value object for use in providing a Spanning Tree;
Figure 3 also illustrates schematically a possible format of a Generalized Label Request type-length-value object according to an embodiment of the invention;
Figure 4 shows schematically a possible implementation the invention;
Figure 5 shows another implementation of the invention;
Figure 6 illustrates yet another implementation of the invention;
Figure 7 depicts the route of an RSVP-TE message across a node ports.

### Detailed description

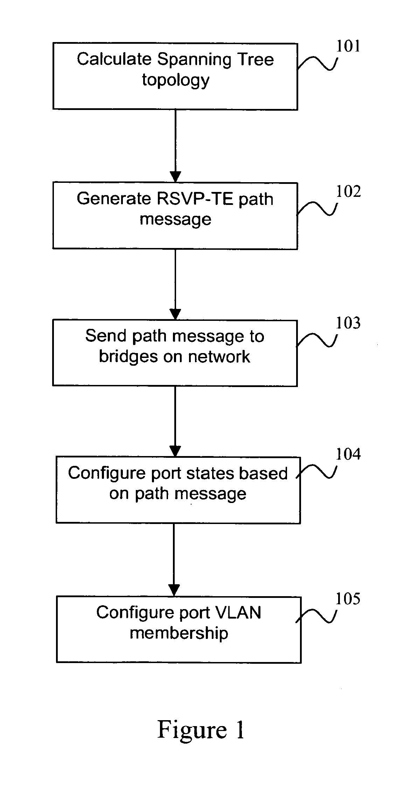

As it is shown in Figure 1, in the first step 101 a Spanning Tree topology is calculated. An RSVP-TE path message is then generated 102, and the path message is sent to bridge nodes in the Ethernet network. The bridge nodes that receive the path message configure their port states in step 104, setting them to forwarding or discarding depending on the Spanning Tree topology information contained in the path message. Optionally, the port VLAN membership is configured in step 105.

R. Aggarwal, at al, "Extensions to RSVP-TE for Point-to-Multipoint TE LSPs" <draft-ietf-mpls-rsvp-te-p2mp-07.txt> Work in progress, January 2007 (referred to herein as P2MP) proposes extensions to RSVP-TE for setting up multicast trees in a network. The procedures described are well suited to control the Spanning Tree topology in an Ethernet network. According to an embodiment of the invention, a dedicated path computation entity calculates the Spanning Tree topology and "downloads" the Spanning Tree configuration e.g. port states or optionally port VLAN membership information to each bridge in the Ethernet network using GMPLS RSVP-TE procedures. Alternatively, each bridge in an Ethernet network may calculate its own shortest path Spanning Tree and use RSVP-TE to set the necessary states in other bridges.

A new SPANNING_TREE_ATTRIBUTES type-length-value object (TLV) is defined to describe Ethernet-specific attributes. The TLV identifies the MSTID, or General Control Plane ID (GCPID), to which the defined tree belongs. Optionally, one or more VIDs are specified that must be bound to this MSTID (or GCPID). The use of VIDs for a specific MSTID allows dynamic configuration of VLAN to MSTID (GCPID) assignments.

The SPANNING_TREE_ATTRIBUTES TLV must be included in the LSP_REQUIRED_ATTRIBUTES (see Farrel et al, "Encoding of Attributes for Multiprotocol Label Switching (MPLS) Label Switched Path (LSP) Establishment Using Resource Reservation Protocol-Traffic Engineering (RSVP-TE)," RFC 4420, February 2006) object and must be unchanged for all sub LSPs of the P2MP session.

When setting up a Spanning Tree, a LSP Integrity Required flag must be set in order to ensure that all branches of the P2MP LSP are established (the tree spans the whole network) before indicating to the root bridge successful P2MP LSP setup.

The Spanning Tree is calculated by a single entity, by a dedicated Path Computation Element (PCE), or on the root node of the tree. Consequently, the whole Spanning Tree is defined as a P2MP-explicit route. That is, an Explicit Route Object (ERO) with an S2L_SUB_LSP object and subsequent Secondary EROs (SEROs) and S2L_SUB_LSPs are used. The definition of the entire tree can be included in a single Path message that can be sent to nodes in the Ethernet network.

Nodes receiving the Path message must examine the new SPANNING_TREE_ATTRIBUTES TLV and check the available resources MSTID, GCPID, VIDs accordingly. All port states belonging to the specified MSTID (GCPID) must be set to "Discarding" immediately on receipt of a corresponding Path massage. In addition to the information in the TLV, the node also records the data plane interfaces/ports corresponding to the previous hop and next hop(s) from the ERO and SEROs. These interfaces/ports are the candidates to be set to a "Forwarding" state for the specific MSTID (GCPID) once the Resv message is received. All other ports will remain in "Discarding" state. If no conflict is detected, each node stores the attributes and candidate port states and processes the P2MP LSP signalling message. Once a Path message reaches a leaf node without error, the leaf node replies with a Resv message including a Label (described below) that optionally contains a MSTID/primary VID mapping (or MSTID/GCPID mapping) obtained from the SPANNING_TREE_ATTRIBUTES TLV. The new Generalized Label serves only as a notification of the establishment of the downstream branches and cross checking of MSTID (GCPID) allocation. Once the Resv message including a Label with correct information passes a node upstream the candidate port states are activated.

Since the MSTIDs (GCPIDs) must be domain-wide unique, all nodes, and especially branching nodes, must check that the label is in accordance with the SPANNING_TREE_ATTRIBUTES TLV received in the Path message and that the label is the same over all the branches.

Once the Resv information from all the leaf nodes arrives at the root node and passes all necessary checks, the whole Spanning Tree is established and can be used for forwarding. MAC address learning, and broadcast of unknown addresses are used over the Spanning Tree as with regular Ethernet forwarding. Moreover, Ethernet layer 2 protocols such as Connectivity Fault Management (CFM) and Multiple Registration Protocol (MRP) can also be utilized without any changes. For instance, MRP can be used to further constrain the forwarding topology of specific VLANs by registering/deregistering certain port memberships. Multicast addresses can also be registered with MRP to join specific multicast sessions. The only difference to a network using MSTP is the calculation and establishment of the underlying Spanning Tree itself.

A. Farrel, et al, "Encoding of Attributes for Multiprotocol Label Switching (MPLS) Label Switched Path (LSP) Establishment Using Resource Reservation Protocol-Traffic Engineering (RSVP-TE)," RFC 4420, February 2006 defines new objects for RSVP-TE messages that allow the signalling of further attribute bits in addition to the flags available in the SESSION_ATTRIBUTE object. The new objects also allow the carriage of arbitrary attribute parameters to make RSVP-TE easily extensible to support new requirements. The LSP_ATTRIBUTES object includes signal attributes required in support of an LSP where the information need not be acted on by all transit Label Switching Routers (LSRs). Specifically, if an LSR does not support the object, it forwards it unexamined and unchanged. The LSP_REQUIRED_ATTRIBUTES object is used to signal attributes required in support of an LSP where each transit LSR must examine the attributes in the LSP_REQUIRED_ATTRIBUTES object and must not forward the object without acting on its contents.

The extensions proposed in R. Aggarwal, at al, "Extensions to RSVP-TE for Point-to-Multipoint TE LSPs" <draft-ietf-mpls-rsvp-te-p2mp-07.txt> Work in progress, January 2007, for P2MP LSP establishment with RSVP-TE can be utilized to describe and signal the Spanning Tree topology once it has been calculated. However, a new TLV is required (SPANNING_TREE_ATTRIBUTES TLV) that describes Ethernet-specific attributes and signals this information in the LSP_REQUIRED_ATTRIBUTES object.

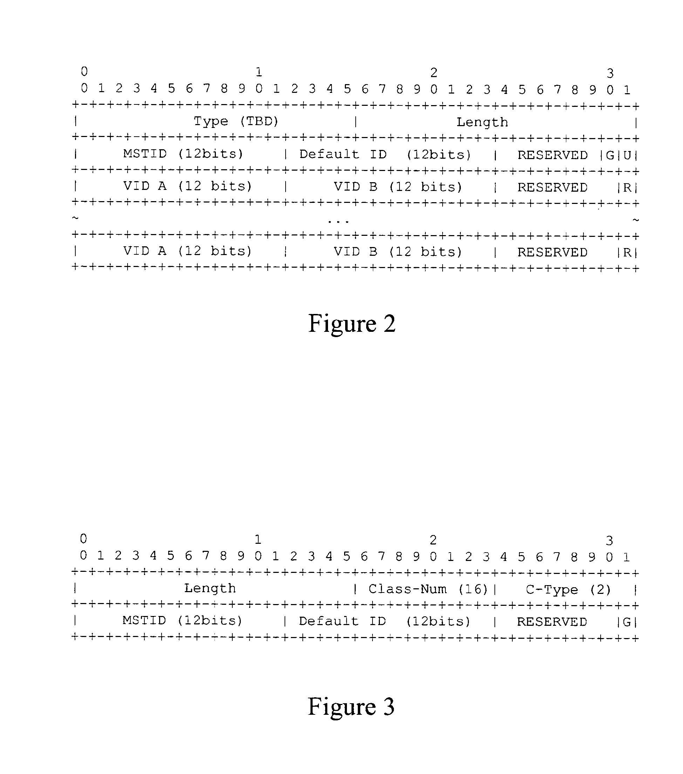

The MSTID (or GCPID) to which the defined tree belongs must be declared. Optionally, one or more VIDs can be specified that are bound to the given MSTID (GCPID). The incursion of VIDs in LSP signalling allows the dynamic configuration of VID to MSTID (GCPID) assignments. The format of the SPANNING_TREE_ATTRIBUTES TLV is illustrated schematically in Figure 2.

The MSTID (12bits) field defines the MSTID to which the defined Spanning Tree belongs.

Default ID (12bits): If the G (General) bit is not set the optional primary VLAN ID of the tree is specified. If no VID is assigned the field must be set to all zeros. If G is set, a GCPID is specified within the given MSTID.

The U (update) bit is set to signal an update to an existing MSTID. That is, no error is generated if the MSTID already exist on intermediate bridges. On the other hand if U is not set a new MSTID must be allocated for this tree. Hence if the selected MSTID exists, the tree establishment fails and a "Routing Problem/MSTID Exist" error is returned.

Further VIDs may be specified. If the R (Range) bit is set, VID A - VID B is interpreted as range of VIDs that are collectively assigned to the given MSTID and GCPID. If R is not set VID A and VID B are interpreted as distinct VID assignments.

A new TLV is added to the LSP_REQUIRED_ATTRIBUTES object to allow future extendibility with additional attributes. However, the information included in the SPANNING_TREE_ATTRIBUTES TLV could alternatively be incorporated into the Generalized Label Request object.

The new generalized label has the form illustrated in Figure 3. The MSTID (12bits) field defines the MSTID to which the defined Spanning Tree belongs.

Default ID (12bits): If G "general" bit is not set the optional primary VLAN ID of the tree, if set the GCPID within the given MSTID.

Since the MSTID (GCPID) must be domain-wide unique, all nodes and especially branching nodes must check that the label is in accordance with the SPANNING_TREE_ATTRIBUTES TLV received in the Path message and that the label is the same over all the branches.

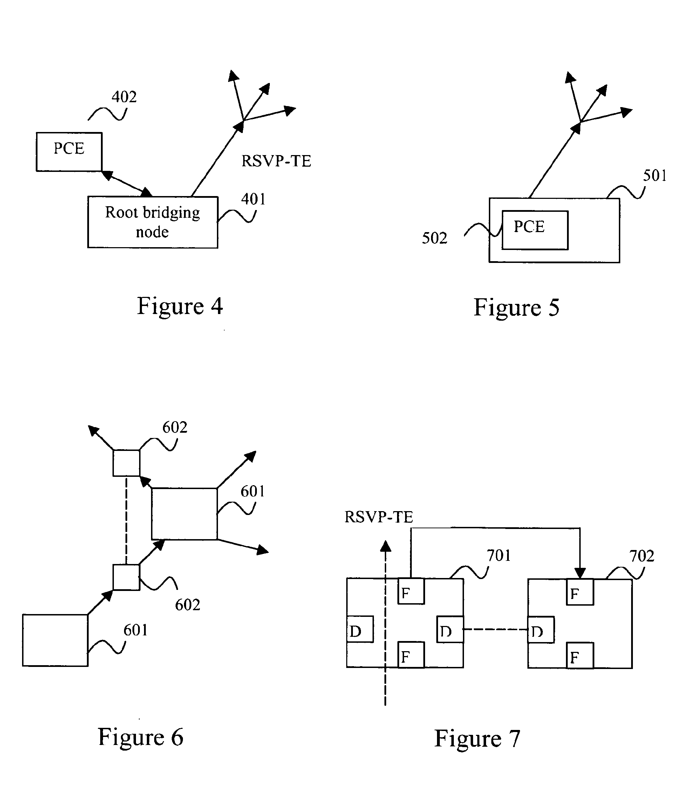

Figure 4 illustrates a possible arrangement of a root bridging node 401 in which the PCE is disposed in a node 402 separate from the root bridging node 401. The PCE calculates the Spanning Tree topology and generates a Path message that includes information identifying the Spanning Tree. The PCE node 402 also has a transmitter for sending the calculated Spanning Tree topology information to the root bridging node 401, which transmits it to other nodes on the Ethernet network.

Figure 5 illustrates another embodiment in which PCE 502 is implemented in the root bridging node 501. In this case there is no need to establish a link between the PCE and the root bridging node 501.

In Figure 6 a possible arrangement of nodes 601, 602 is illustrated in which the connection between ports of nodes 602 depicted by dashed line is discarded, while other connections, illustrated by solid arrows, are set forwarding.

Figure 7 shows an exemplary relation between two nodes 701, 702 the ports of which are set to forwarding (indicated by F) or to discarding (indicated by D). The RSVP-TE message (dashed arrow) specifies the configuration of port states: F/D.

By allowing centralized configuration of the Spanning Tree that defines the topology of the Ethernet network using GMPLS as an alternative to M/RSTP, the network maintains its learning capabilities and increased control and management of the network is provided.

It will be appreciated by the person of skill in the art that various modifications may be made to the above-described embodiments without departing from the scope of the present invention.

## Claims

1. A method of providing a Spanning Tree to nodes on an Ethernet network, the method comprising:
calculating (101) a Spanning Tree topology;
generating (102) a Resource Reservation Protocol Traffic Extension path message, the message containing at least a part of the Spanning Tree topology;
sending (103) the path message to bridge nodes on the Ethernet networks; and
at the bridge nodes, configuring (104) port states based on Spanning Tree topology information contained in the path message.

2. The method according to claim 1, further comprising, at the bridge nodes, configuring port Virtual Local Area Network membership.

3. The method according to claim 1 or 2, wherein the message contains the Spanning Tree topology for the entire Ethernet network.

4. The method according to any one of claims 1, 2 or 3, wherein the message contains either a Spanning Tree instance identifier or a General Control Plane Identifier.

5. The method according to any one of claims 1 or 2, wherein the message contains a Virtual Local Area Network Identifier, the Virtual Local Area Network Identifier being associated with either a Spanning Tree instance identifier or a General Control Plane Identifier

6. The method according to any one of claims 1 to 5, wherein the path message comprises a type-length-value object included in a Label Switched Path object.

7. The method according to any one of claims 1 to 6, wherein the Spanning Tree topology is calculated by a dedicated node disposed on the Ethernet network.

8. The method according to any one of claims 1 to 6, wherein the Spanning Tree topology is calculated by a root bridge node of the Spanning Tree.

9. A node (501) for use in an Ethernet network, having a Path Computational Element, PCE, (502) comprising:
processing means for calculating a Spanning Tree topology for the Ethernet network;
means for generating a Resource Reservation Protocol Traffic Extension path message, the message containing at least a part of the Spanning Tree topology; and
a transmitter for sending the path message to bridge nodes on the Ethernet network, the path message containing Spanning Tree topology information arranged to be used by the bridge nodes to configure port states.

10. The node according to claim 9, wherein the node is a root bridge.

11. A bridge node (701) for use in an Ethernet network, the bridging node comprising:
a receiver for receiving a Resource Reservation Protocol Traffic Extension path message, the message containing at least a part of a Spanning Tree topology;
means to set port states to Discarding or Forwarding depending on the Spanning Tree topology contained in the message.

12. The bridging node according to claim 11, further comprising means to set port VLAN membership.

## Patentansprüche

1. Verfahren zur Bereitstellung eines Spannbaums für Knoten in einem Ethernet-Netzwerk, wobei das Verfahren umfasst:
Berechnen (101) einer Spannbaum-Topologie;
Erzeugen (102) einer Ressourcenreservierungsprotokoll-Verkehrsplanungs-(RSVP-TE-)Pfadnachricht, wobei die Nachricht mindestens einen Teil der Spannbaum-Topologie enthält;
Senden (103) der Pfadnachricht an Brückenknoten im Ethernet-Netzwerk; und
an den Brückenknoten erfolgendes Konfigurieren (104) von Portzuständen auf der Grundlage von Spannbaum-Topologieinformation, die in der Pfadnachricht enthalten ist.

2. Verfahren nach Anspruch 1, ferner umfassend: an den Brückenknoten erfolgendes Konfigurieren der Portmitgliedschaft im virtuellen lokalen Netzwerk (VLAN).

3. Verfahren nach Anspruch 1 oder 2, wobei die Nachricht die Spannbaum-Topologie für das gesamte Ethernet-Netzwerk enthält.

4. Verfahren nach einem der Ansprüche 1, 2 oder 3, wobei die Nachricht entweder eine Spannbaum-Instanzkennung oder eine Kennung der allgemeinen Steuerebene enthält.

5. Verfahren nach Anspruch 1 oder 2, wobei die Nachricht eine Kennung des virtuellen lokalen Netzwerks enthält, wobei der Kennung des virtuellen lokalen Netzwerks entweder eine Spannbaum-Instanzkennung oder eine Kennung der allgemeinen Steuerebene (GCP) zugeordnet ist.

6. Verfahren nach einem der Ansprüche 1 bis 5, wobei die Pfadnachricht ein Typ-Länge-Wert-Objekt umfasst, das in einem Labelvermittelten-Pfad-(LSP-)Objekt eingeschlossen ist.

7. Verfahren nach einem der Ansprüche 1 bis 6, wobei die Spannbaum-Topologie durch einen zweckgebundenen Knoten berechnet wird, der im Ethernet-Netzwerk angeordnet ist.

8. Verfahren nach einem der Ansprüche 1 bis 6, wobei die Spannbaum-Topologie durch einen Wurzelbrückenknoten des Spannbaums berechnet wird.

9. Knoten (501) zur Verwendung in einem Ethernet-Netzwerk, aufweisend ein Pfadberechnungselement PCE (502), umfassend:
Verarbeitungsmittel zum Berechnen einer Spannbaum-Topologie für das Ethemet-Netzwerk;
Mittel zum Erzeugen einer RSVP-TE-Pfadnachricht, wobei die Nachricht mindestens einen Teil der Spannbaum-Topologie enthält; und
einen Sender zum Senden der Pfadnachricht an Brückenknoten im Ethernet-Netzwerk, wobei die Pfadnachricht Spannbaum-Topologieinformation enthält, die angeordnet ist, um durch die Brückenknoten verwendet zu werden, um Portzustände zu konfigurieren.

10. Knoten nach Anspruch 9, wobei der Knoten eine Wurzelbrücke ist.

11. Brückenknoten (701) zur Verwendung in einem Ethernet-Netzwerk, wobei der Brückenknoten umfasst:
einen Empfänger zum Empfangen einer RSVP-TE-Pfadnachricht, wobei die Nachricht mindestens einen Teil einer Spannbaum-Topologie enthält;
Mittel, um Portzustände auf Verwerfen oder Weiterleiten zu setzen, abhängig von der Spannbaum-Topologie, die in der Nachricht enthalten ist.

12. Brückenknoten nach Anspruch 11, ferner umfassend: Mittel zum Setzen der VLAN-Portmitgliedschaft.

## Revendications

1. Procédé destiné à fournir un arbre de recouvrement à des noeuds sur un réseau Ethernet, le procédé comprenant les étapes ci-dessous consistant à :
calculer (101) une topologie d'arbre de recouvrement ;
générer (102) un message de chemin d'extension de trafic de protocole de réservation de ressources, le message contenant au moins une partie de la topologie d'arbre de recouvrement ;
envoyer (103) le message de chemin à des noeuds de passerelle sur le réseau Ethernet ; et
au niveau des noeuds de passerelle, configurer (104) des états de port sur la base d'informations de topologie d'arbre de recouvrement contenues dans le message de chemin.

2. Procédé selon la revendication 1, comprenant en outre, au niveau des noeuds de passerelle, l'étape consistant à configurer une appartenance de port au réseau local virtuel.

3. Procédé selon la revendication 1 ou 2, dans lequel le message contient la topologie d'arbre de recouvrement pour l'ensemble du réseau Ethernet.

4. Procédé selon l'une quelconque des revendications 1, 2 ou 3, dans lequel le message contient un identifiant d'instance d'arbre de recouvrement ou un identifiant de plan de commande générique.

5. Procédé selon l'une quelconque des revendications 1 ou 2, dans lequel le message contient un identifiant de réseau local virtuel, l'identifiant de réseau local virtuel étant associé à un identifiant d'instance d'arbre de recouvrement ou à un identifiant de plan de commande générique.

6. Procédé selon l'une quelconque des revendications 1 à 5, dans lequel le message de chemin comprend un objet de type-longueur-valeur inclus dans un objet de chemin à commutation d'étiquette.

7. Procédé selon l'une quelconque des revendications 1 à 6, dans lequel la topologie d'arbre de recouvrement est calculée par un noeud dédié agencé sur le réseau Ethernet.

8. Procédé selon l'une quelconque des revendications 1 à 6, dans lequel la topologie d'arbre de recouvrement est calculée par un noeud de passerelle racine de l'arbre de recouvrement.

9. Noeud (501) destiné à être utilisé dans un réseau Ethernet, présentant un élément de calcul de chemin, PCE, (502) comprenant :
un moyen de traitement pour calculer une topologie d'arbre de recouvrement pour le réseau Ethernet ;
un moyen pour générer un message de chemin d'extension de trafic de protocole de réservation de ressources, le message contenant au moins une partie de la topologie d'arbre de recouvrement ; et
un émetteur pour envoyer le message de chemin à des noeuds de passerelle sur le réseau Ethernet, le message de chemin contenant des informations de topologie d'arbre de recouvrement agencées de manière à être utilisées par les noeuds de passerelle pour configurer des états de port.

10. Noeud selon la revendication 9, dans lequel le noeud est un pont racine.

11. Noeud de passerelle (701) destiné à être utilisé dans un réseau Ethernet, le noeud de passerelle comprenant :
un récepteur pour recevoir un message de chemin d'extension de trafic de protocole de réservation de ressources, le message contenant au moins une partie d'une topologie d'arbre de recouvrement ;
un moyen pour définir des états de port sur Abandon ou Acheminement, selon la topologie d'arbre de recouvrement contenue dans le message.

12. Noeud de passerelle selon la revendication 11, comprenant en outre un moyen pour définir une appartenance de port au réseau local virtuel (VLAN).
